# EUROPÄISCHE PATENTANMELDUNG

(11) **EP 4 762 906 A1**
(43) Veröffentlichungstag der Anmeldung: **24.06.2026**
(21) Anmeldenummer: 25184118.5
(22) Anmeldetag: 20.06.2025
(51) Int. Cl.: A01D 34/71, A01D 43/063, A01D 34/73, A01D 34/90, A01D 34/81

(54) **RASENTRIMMER**

(30) Priorität: 18.12.2024 DE 202024107365 U
(71) Anmelder: DS Produkte GmbH, 22145 Stapelfeld (DE)
(72) Erfinder: Trumpler, Joakim, 22145 Hamburg (DE)
(74) Vertreter: Eisenführ Speiser

(57) **Zusammenfassung**

Die Erfindung betrifft einen tragbaren Rasentrimmer (1) umfassend: einen Führungsstiel (2), einen an einem ersten unteren Ende (7) des Führungsstiels (2) angeordneten Schneidkopf (100) mit einem im Betrieb um eine Drehachse (D) in einer Drehebene (E) innerhalb einer Rotationsfläche (Fr) rotierenden Schneidwerkzeug (104) und einen Antrieb (105) zum Antreiben des Schneidwerkzeugs (104) um die Drehachse (D), dadurch gekennzeichnet, dass der Rasentrimmer (1) eine Auffangvorrichtung (200) und der Schneidkopf (100) eine Schutzhaube (110) aufweist, wobei die Schutzhaube (110) das im Betrieb um die Drehachse (D) in der Drehebene (E) rotierende Schneidwerkzeug (104) von oben bis auf eine Durchgangsöffnung (112) umschließt und die Schutzhaube (110) und das Schneidwerkzeug (104) derart eingerichtet und angeordnet sind, dass vom Schneidwerkzeug (104) im Betrieb erzeugter Schnitt durch die Durchgangsöffnung (112) in der Schutzhaube (110) in die Auffangvorrichtung (200) befördert wird, wobei die Schutzhaube (110) und das Schneidwerkzeug (104) ausgebildet sind, um zur Beförderung des Schnitts durch die Durchgangsöffnung (112) bezüglich einer Luftströmung zu kooperieren.

## Beschreibung

Die Erfindung betrifft einen tragbaren Rasentrimmer gemäß dem Oberbegriff des Anspruchs 1.

Ein Rasentrimmer ist ein tragbares, handgeführtes Gartengerät, das ohne Abstützung am Boden (ohne Rollen, Räder etc.) über einen Führungsstiel bedient wird und an seinem Schneidkopf ein oder mehrere rotierende Schneidwerkzeuge besitzt. Diese können beispielsweise radial ausgerichtete Klingen bzw. Schneidmesser oder einen Mähfaden umfassen.

Der Schneidkopf lässt sich in verschiedene Positionen bewegen, darunter eine Trimmstellung und eine vertikale Schneidposition, auch bekannt als Kantenschneidstellung oder Edging-Stellung. Grundsätzlich kann mit einem Rasentrimmer Rasen an den Kanten entfernt werden. Ein Rasentrimmer wird typischerweise ohne Bodenkontakt eingesetzt, ähnlich wie ein Freischneider.

Es ist eine Aufgabe der Erfindung einen tragbaren Rasentrimmer bereitzustellen, der eine komfortablere Bedienung ermöglicht, insbesondere im Hinblick auf den im Betrieb entstehenden Schnitt.

Gemäß einem Aspekt stellt die vorliegende Offenbarung einen Rasentrimmer bereit, der die folgenden Komponenten umfassen kann. Einen Führungsstiel und einen an einem ersten unteren Ende des Führungsstiels angeordneten Schneidkopf. Der Schneidkopf kann ein im Betrieb um eine Drehachse in einer Drehebene innerhalb einer Rotationsfläche rotierendes Schneidwerkzeug umfassen.

Ferner kann der Rasentrimmer einen Antrieb aufweisen, der eingerichtet ist, um das Schneidwerkzeug im Betrieb (normaler Schneidbetrieb) um die Drehachse (in einer ersten Drehrichtung) rotieren zu lassen. Der Antrieb kann dicht am Schneidkopf angeordnet sein, so dass er als Bestandteil des Schneidkopfes angesehen werden kann. Alternativ kann der Antrieb auch weiter oben am Führungsstiel angeordnet sein und das Schneidwerkzeug über eine entsprechende mechanische Kopplung (Welle etc.) antreiben.

Der Antrieb kann ein Elektromotor sein. Ebenso kann es sich beim Antrieb um einen Verbrennungsmotor handeln.

Es kann ein erster Handgriff vorgesehen sein, der an einem dem Schneidkopf gegenüberliegenden zweiten oberen Ende des Führungsstiels angeordnet ist. Zusätzlich kann etwa in der Mitte des Führungsstils ein zweiter Handgriff vorgesehen sein.

Gemäß einem vorteilhaften Aspekt kann der Rasentrimmer eine Auffangvorrichtung für Schnitt aufweisen.

Gemäß einem weiteren vorteilhaften Aspekt kann der Schneidkopf eine Schutzhaube aufweisen. Bei entsprechender Ausgestaltung kann die Schutzhaube im Hinblick auf eine Beförderung von Schnitt in eine Auffangvorrichtung vorteilhaft sein.

Vorteilhaft ist daher im Inneren der Schutzhaube ein Strömungsprofil ausgebildet ist, welches die Beförderung von Schnitt in die Auffangvorrichtung unterstützt.

Die Durchgangsöffnung kann bezüglich der Drehachse des Schneidwerkzeuges asymmetrisch angeordnet sein. Dabei ist vorteilhaft berücksichtigt, dass der Schnitt aufgrund der Bewegung/Rotation des Schneidwerkzeuges eine besondere Dynamik hat.

Das Schneidwerkzeug kann im Betrieb um die Drehachse in der Drehebene bspw. in einer ersten Drehrichtung (normaler Schneidbetrieb) rotieren.

Die Fläche, die vom Schneidwerkzeug während der Rotation überstrichen wird, wird im vorliegenden Kontext als Rotationsfläche bezeichnet. Die Rotationsfläche liegt in der Drehebene Vorteilhaft überdeckt die Schutzhaube die Rotationsfläche von oben und ragt über den äußeren Umfang der Rotationsfläche mindestens geringfügig hinaus.

Mit Vorteil überdeckt die Schutzhaube mindestens zu einem überwiegenden Teil, insbesondere mindestens 270°, einen äußeren Umfang des im Betrieb um die Drehachse rotierende Schneidwerkzeugs. Mit anderen Worten kann die Schutzhaube vorteilhaft um die Rotationsfläche herum reichen und diese umschließen und nur im Bereich der Durchgangsöffnung geöffnet sein. Von außen gesehen, kann das Schneidwerkzeug von der Schutzhaube von oben und seitlich umschlossen und geschützt sein. Lediglich nach unten und im Bereich der Durchgangsöffnung ist die Schutzhaube offen.

Vorteilhaft kann die Schutzhaube grundsätzlich derart eingerichtet und angeordnet sein, dass vom Schneidwerkzeug im Betrieb erzeugter Schnitt durch eine Durchgangsöffnung in der Schutzhaube in die Auffangvorrichtung befördert wird.

Die Schutzhaube kann in einem der Auffangvorrichtung zugewandten Bereich ausgebildet sein, um eine lösbare Ankopplung der Auffangvorrichtung zu ermöglichen.

Die Schutzhaube kann dazu insbesondere einen ersten Adapterquerschnitt bilden, der zum lösbaren Ankoppeln eines korrespondierenden zweiten Adapterquerschnitts der Auffangvorrichtung ausgebildet ist. Die korrespondierenden Adapterquerschnitte der Schutzhaube und der Auffangvorrichtung betreffen dabei die strukturelle, physische Ausgestaltung, die so aufeinander abgestimmt ist, dass bei angekoppelter Auffangvorrichtung die Durchgangsöffnung in die Auffangvorrichtung führt. Mit anderen Worten steht bei angekoppelter Auffangvorrichtung das Innere der Auffangvorrichtung über die Durchgangsöffnung in kommunizierender Verbindung mit dem Innenraum der Schutzhaube.

Gemäß einem vorteilhaften Aspekt ist innerhalb der Schutzhaube mindestens ein Strömungsprofil durch eine innere Kontur ausgebildet, die derart eingerichtet und angeordnet ist, dass die Bewegung des Schnitts in die Auffangvorrichtung gefördert wird. Dabei ist berücksichtigt worden, dass der Schnitt nicht ohne Weiteres vom Inneren der Schutzhaube durch die Durchgangsöffnung in die Auffangvorrichtung gelangt. Vorteilhaft muss hierzu im Inneren der Schutzhaube ein geeignetes und auf die Art und den Betrieb des Schneidwerkzeuges abgestimmtes Strömungsprofil ausgebildet sein.

Mit Vorteil kann die innere Kontur, die zur Ausbildung des Strömungsprofils dient, in einem der Auffangvorrichtung zugewandten Bereich angeordnet sein und von einer äußeren Kontur der Schutzhaube beabstandet sein. Zum Beispiel kann die Schutzhaube eine äußere Wand aufweisen und eine oder mehrere innere Wände und Konturen, die dann die innere Kontur bilden und damit das Strömungsprofil erzeugen.

Gemäß einem Aspekt kann die innere Kontur nach Art eines Schachts ausgebildet sein und eine Zuführung des im Betrieb erzeugten Schnitts zur Durchgangsöffnung unterstützen.

Die innere Kontur kann dazu von einer oder mehreren inneren Wänden gebildet werden.

Der Schacht kann vom Schneidwerkzeug in Richtung auf die Durchgangsöffnung zulaufen und im Verlauf enger werden. Dabei kann er anfänglich, also näher am Schneidwerkzeug breiter sein als in der Nähe der Durchgangsöffnung. Dabei bezieht sich hier die Breite des Schachts auf eine Dimension in der Drehebene.

Die innere Kontur kann vorteilhaft eine untere Führung, insbesondere eine Platte, aufweisen, die den von der Schutzhaube von oben überdeckten Bereich von unten außerhalb der Rotationsfläche im Bereich der Durchgangsöffnung mindestens teilweise überdeckt und nach unten abschließt. Dadurch wird verhindert, dass Schnitt nach unten verloren geht.

Die innere Kontur kann ein erstes Profil auf einer ersten Seite der Durchgangsöffnung aufweisen, das anders ausgestaltet ist als ein zweites Profil auf einer zweiten Seite der Durchgangsöffnung, wobei die erste Seite bezogen auf die Drehrichtung des Schneidwerkzeuges vor der Durchgangsöffnung und die zweite Seite nach der Durchgangsöffnung angeordnet ist.

Das erste Profil kann so ausgestaltet sein, dass es dem Umfang des im Betrieb um die Drehachse rotierenden Schneidwerkzeugs länger folgt als das zweite Profil, wobei insbesondere das erste Profil bezogen auf den Umfang des rotierenden Schneidwerkzeuges flacher (tangential) verläuft, als das zweite Profil, so dass vom Schneidwerkzeug erzeugter Schnitt vom ersten Profil länger geführt wird als vom zweiten Profil und vom zweiten Profil in einem steileren Winkel (steiler als der Winkel des ersten Profils) auf die Durchgangsöffnung geführt wird.

Mit Vorteil können die Schutzhaube und das Schneidwerkzeug ausgebildet sein, um zur Beförderung des Schnitts durch die Durchgangsöffnung zu kooperieren. Das Schneidwerkzeug und die Schutzhaube können dahingehend ausgebildet sein, dass sie bezüglich einer Strömung von Luft zur Beförderung des Schnitts kooperieren.

Das Schneidwerkzeug kann geometrisch, insbesondere strömungstechnisch, eingerichtet sein, um den Schnitt zur Auffangvorrichtung zu befördern.

Das Schneidwerkzeug, insbesondere mindestens ein Schneidmesser des Schneidwerkzeugs kann ausgestaltet sein, um im Betrieb eine Luftströmung, in die Schutzhaube hinein, zu bewirken.

Das Schneidmesser kann im Betrieb einen Unterdruck (oder Sog) erzeugen, der den Schnitt in die Schutzhaube hineinsaugt.

Die im Betrieb vom Schneidwerkzeug erzeugte Luftströmung kann mit Vorteil von der Schutzhaube umgelenkt und in Richtung auf die Durchgangsöffnung abgeleitet /abgelenkt werden.

Das Schneidwerkzeug, insbesondere das Schneidmesser, kann strukturell und geometrisch ausgestaltet sein, um die Luftströmung bzw. den Sog bzw. Unterdruck zu erzeugen.

Gemäß einem Aspekt kann das Schneidwerkzeug zweiteilig sein. Alternativ kann das Schneidwerkzeug auch einteilig, also aus einem Stück sein. Bei einer zweiteiligen Ausgestaltung gibt es zwei körperlich getrennte Schneidmesser. Diese können separat ausgetauscht werden, was die Ersatzteilkosten reduzieren kann.

Mit Vorteil kann das Schneidwerkzeug mindestens ein Strömungselement aufweisen. Durch das Strömungselement kann das Verhalten des Schneidwerkzeugs und des Schnitts optimiert werden. Das Schneidmesser kann mindestens einen abgewinkelten Anteil/Teil aufweisen, welcher das Strömungselement bildet. Vorteilhaft kann das Schneidmesser einen ersten Anteil umfassen der schmaler (weniger breit) ist als ein zweiter Anteil, wobei der zweite Anteil radial (bezogen auf die Drehachse) weiter außen liegen kann. Der zweite Anteil kann dann den abgewinkelten Anteil umfassen.

Vorteilhaft kann das Schneidmesser eine Schnittkante aufweisen und das mindestens eine Strömungselement kann auf einer der Schnittkante gegenüberliegenden Seite des Schneidmessers angeordnet sein.

Das Strömungselement kann ausgebildet sein, um im Betrieb die Luftströmung zu erzeugen. Diese Luftströmung kann in die Schutzhaube hinein gerichtet sein. Das Strömungselement kann so ausgestaltet sein, dass ein Unterdruck bzw. ein Sog erzeugt wird, der den Schnitt in die Schutzhaube hineinsaugt.

Wenn das Schneidwerkezug zwei Schneidmesser aufweist (gleich ob es einstückig (einteilig) oder zweiteilig ist) kann entsprechend je ein Strömungselement auf jedem Schneidmesser angeordnet sein.

Das Gewicht eines Schneidmessers, insbesondere eines Teils bzw. einer Klinge eines Schneidmessers, kann vorteilhaft nicht größer sein als 10 g, vorteilhaft nicht größer sein als 5 g, insbesondere nicht größer als 3 g. Es kann mit Vorteil in einem Bereich von 2,2 g liegen.

Das Schneidwerkzeug kann aus Metall sein. Mit Vorteil umfasst das Schneidwerkzeug und insbesondere das Schneidmesser einen Kunststoff oder besteht vollständig aus diesem Kunststoff.

Bei diesem Kunststoff des Schneidmessers kann es sich bspw. um Polyphenylensulfid (mit 40% Glasfaseranteil handeln (PPS GF40). Es kann sich auch um Polyoxymethylen (POM), auch als Acetal bekannt handeln. Auch Polycarbonat (PC) kommt in Betracht.

Mit besonderem Vorteil kann das Schneidwerkzeug, insbesondere das Schneidmesser jedoch anteilig oder vollständig aus Polyamid (PA) sein, das auch als Nylon bekannt ist. Das Polyamid kann vorteilhaft einen Glasfaseranteil aufweisen.

Besonders vorteilhaft besteht das Schneidmesser bzw. das Schneidwerkzeug aus Polyamid mit einem Glasfaseranteil von über 10%, insbesondere mit einem Anteil an Glasfaser von etwa einem Drittel (33%/34%), d.h. es kann sich um PA66 (66% Polyamid mit etwa 33% Glasfaser) handeln.

Der Rasentrimmer kann mit Vorteil ausschließlich tragbar bzw. für den tragbaren Gebrauch eingerichtet sein und keine Einrichtungen besitzen, die ihn über die zu bearbeitende Fläche tragen, wie bspw. Räder oder Rollen. Der Rasentrimmer kann also rollenfrei sein.

Das Gewicht (Gesamtgewicht ohne Füllung der Auffangvorrichtung) des Rasentrimmers kann kleiner sein als 10 kg, vorteilhaft kleiner als 5 kg, vorteilhaft kleiner als 2 kg, insbesondere ca. 1,5 kg.

Der Rasentrimmer kann eingerichtet sein, um im Akkubetrieb bei einer Drehzahl von 800 rpm (Umdrehungen pro Minute, ggf. steuerbar) eine Laufzeit (Arbeitszeit) von 25 Minuten zu haben. Die Laufzeit kann ohne Last ca. 30 Minuten betragen. Der Geräuschpegel (Noise Level) kann im Betrieb bei einem Meter Abstand 78 dB betragen. Mit Vorteil kann der Rasentrimmer mit einer Spannung über 3 V, vorteilhaft über 5 V, vorteilhaft über 10 V betrieben werden. Besonders vorteilhaft sind 11,2 V oder mehr. Der Akku kann bspw. 2000 mAh Kapazität haben und einen Ladeoutput von 12 V und 500 mA. Es kann sich um einen Li-Ionen Akku handeln. Mit Vorteil kann der Rasentrimmer ausschließlich Akku-betrieben sein (kein Netzbetrieb).

Gemäß einem Aspekt kann die Auffangvorrichtung verstellbar sein. Dabei kann die Auffangvorrichtung als Beutel ausgestaltet sein.

Die Auffangvorrichtung kann mit einer der Schutzhaube abgewandten Seite, an dem Führungsstiel verstellbar befestigbar sein, insbesondere durch eine Schnur, ein Seil, einen Faden, eine Leine, einen Strick oder ähnliches.

Die Auffangvorrichtung kann über einen Taster mit dem Schneidkopf bzw. der Schutzhaube koppelbar und lösbar sein.

Es kann ein Verschlusselement bzw. eine Verschlussklappe vorgesehen sein, die beim Entfernen der Auffangvorrichtung, vorteilhaft automatisch, die Durchgangsöffnung abdeckt bzw. verschließt. Die Verschlussklappe kann federgelagert sein (Kraft liegt an und schließt die Klappe, wenn die Auffangvorrichtung entfernt wird).

Die vorliegende Offenbarung stellt ebenfalls ein tragbares (rollenfreies) Gartengerät oder eine tragbares (rollenfreies) Gartenwerkzeug bereit, das einen Schneidkopf aufweist, der ein Schneidwerkzeug besitzt. Der Schneidkopf und/oder das Schneidwerkzeug sind vorteilhaft gemäß den Aspekten und Merkmalen ausgestaltet, die hier beschrieben sind.

Die vorliegende Offenbarung stellt ebenfalls ein tragbares (rollenfreies) motorisiertes Gartengerät oder Gartenwerkzeug, insbesondere ein elektrisch angetriebenes tragbares (rollenfreies) Gartengerät oder Gartenwerkzeug bereit, dass eine Schutzhaube und/oder ein Schneidwerkzeug gemäß den Merkmalen und Aspekten der vorliegenden Offenbarung aufweist.

Die vorliegende Offenbarung stellt ebenfalls einen tragbaren (rollenfreien) Freischneider bereit, der einen Schneidkopf aufweist, der ein Schneidwerkzeug aufweist. Der Schneidkopf und/oder das Schneidwerkzeug sind vorteilhaft gemäß den Aspekten und Merkmalen ausgestaltet, die hier beschrieben sind.

Die vorliegende Offenbarung stellt ebenfalls einen motorisierten tragbaren (rollenfreien) Freischneider, insbesondere einen elektrisch angetriebenen Freischneider bereit, der eine Schutzhaube und/oder ein Schneidwerkzeug gemäß den Merkmalen und Aspekten der vorliegenden Offenbarung aufweist.

Insbesondere können die vorgenannten tragbaren (rollenfreien) Gartengeräte, Gartenwerkzeuge und/oder Freischneider ein Schneidwerkzeug, insbesondere Schneidmesser aufweisen, das im Wesentlichen aus Kunststoff besteht. Bei dem Kunststoff des Schneidmessers kann es sich bspw. um Polyamid mit einem Glasfaseranteil von über 10% handeln, insbesondere mit einem Anteil an Glasfaser von etwa einem Drittel (33%/34%), d.h. es kann sich um PA66 (66% Polyamid mit etwa 33% Glasfaser) handeln. Es kann eine Schutzhaube vorgesehen sein, die das Schneidwerkzeug/Schneidmesser bis auf eine Durchgangsöffnung zu einer Auffangvorrichtung umschließt, und lediglich nach unten offen ist. Das Schneidmesser kann strömungstechnisch mit der Schutzhaube zusammenwirken um unterhalb der Schutzhaube einen Sog (Unterdruck) zu bilden und den Schnitt (bspw. Rasenschnitt) von unterhalb und innerhalb der Schutzhaube durch die Durchgangsöffnung in die Auffangvorrichtung zu befördern. Das Schneidwerkzeug/Schneidmesser kann dazu ein Strömungselement (Flügel) aufweisen. Weitere Merkmale und Aspekte ergeben sich aus der vorliegenden Offenbarung.

Weitere Merkmale und Aspekte der Erfindung ergeben sich aus der nachfolgenden Beschreibung von Ausführungsbeispielen unter Bezugnahme auf die folgenden beigefügten Figuren:
Figur 1 ist eine vereinfachte schematische perspektivische Darstellung eines Rasentrimmers seitlich von oben gemäß einer Ausführung,
Figur 2 ist eine vereinfachte schematische perspektivische Darstellung eines Rasentrimmers seitlich von unten gemäß einer Ausführung,
Figur 3 ist eine vereinfachte schematische perspektivische Darstellung eines Rasentrimmers von der Seite gemäß einer Ausführung,
Figur 4 ist eine vereinfachte schematische Draufsicht auf das isolierte Schneidwerkzeug im Schneidkopf,
Figur 5 ist eine vereinfachte schematische seitliche Ansicht des isolierten Schneidwerkzeugs,
Figur 6 ist eine vereinfachte schematische Draufsicht auf eine Klinge des Schneidmessers,
Figur 7 ist ein vereinfachter schematischer Querschnitt des Schneidmessers mit Flügel,
Figur 8 ist ein vereinfachter seitlicher Ausschnitt der Figur 3 (seitliche Ansicht) mit transparenter Schutzhaube,
Figur 9 ist ein vereinfachter perspektivischer Ausschnitt einer Ansicht auf den Schneidkopf von schräg unten,
Figur 10 ist ein vereinfachter perspektivischer Ausschnitt einer Ansicht auf den Schneidkopf von unten,
Figur 11 ist ein vereinfachter perspektivischer Querschnitt einer Ansicht auf den Schneidkopf von schräg unten
Figur 12 ist eine vereinfachte perspektivische Ansicht auf den Schneidkopf aus Richtung der Auffangvorrichtung, wobei die Auffangvorrichtung nicht dargestellt ist und
Figur 13 ist eine vereinfachte perspektivische Ansicht aus Richtung des Schneidkopfes auf den Übergangsbereich zwischen Schneidkopf und Auffangvorrichtung, wobei die meisten Teile des Schneidkopfes nicht dargestellt sind.

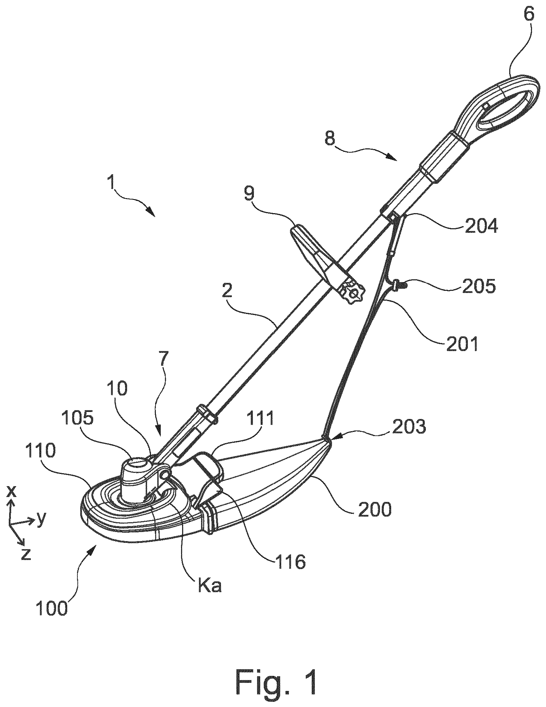

Die Figuren 1 bis 13 zeigen verschieden Ansichten eines Ausführungsbeispiels für einen Rasentrimmer 1 gemäß der vorliegenden Offenbarung.

Die Figuren 1, 2 und 3 zeigen perspektivische seitliche Ansichten mit unterschiedlicher Neigung. Der Rasentrimmer 1 umfasst einen Führungsstiel 2 und einen an einem ersten unteren Ende 7 des Führungsstiels 2 angeordneten Schneidkopf 100.

Der Schneidkopf 100 kann mittels einer Gelenkanordnung 10 mit dem Führungsstiel 2 gekoppelt sein. Dadurch kann der Schneidkopf 100 mit dem Führungsstiel 2 verstellbar gekoppelt sein.

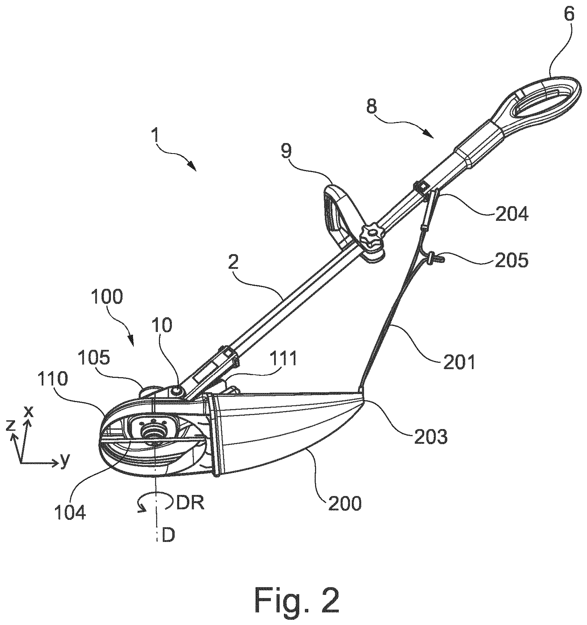

Der Schneidkopf 100 weist ein im Betrieb rotierendes Schneidwerkzeug 104 auf. Ferner kann der Rasentrimmer 1 einen Antrieb 105 aufweisen, der eingerichtet ist, um das Schneidwerkzeug 104 im Betrieb - der hier durchgängig als normaler Schneidbetrieb zu verstehen ist - um die Drehachse D in einer (ersten) Drehrichtung DR rotieren zu lassen (vgl. Fig. 2). Der Antrieb 105 kann dicht am Schneidkopf 100 angeordnet sein, so dass er als Bestandteil des Schneidkopfes 100 angesehen werden kann. In anderen Ausführungen kann der Antrieb 105 auch weiter oben am Führungsstiel 2 angeordnet sein und das Schneidwerkzeug 104 über eine entsprechende mechanische Kopplung, wie z.B. eine Welle, Zahnräder etc., antreiben.

Im vorliegenden Ausführungsbeispiel ist der Antrieb 105 ein Elektromotor. Alternativ kann es sich beim Antrieb 105 um einen Verbrennungsmotor handeln.

Es kann ein erster Handgriff 6 vorgesehen sein, der an einem dem Schneidkopf 100 gegenüberliegenden zweiten oberen Ende 8 des Führungsstiels 2 angeordnet ist. Zusätzlich kann etwa in der Mitte des Führungsstils 2 ein zweiter Handgriff 9 vorgesehen sein.

Der Rasentrimmer 1 weist eine Auffangvorrichtung 200 auf, die ausgestaltet ist, den vom Schneidwerkzeug erzeugten Schnitt aufzunehmen. Der Schneidkopf 100 weist eine Schutzhaube 110 auf. Gemäß diesem Ausführungsbeispiel ist die Auffangvorrichtung 200 verstellbar. Dazu ist die Auffangvorrichtung 200 mit einer von der Schutzhaube 100 abgewandten Seite 203, an dem Führungsstiel 2 verstellbar und lösbar befestigt. Hierfür ist eine Leine 201 (auch Schnur, Seil, Faden, Strick oder ähnliches) vorgesehen, die an dem hinteren Ende 203 der Auffangvorrichtung 200 einerseits und andererseits an einem Haken 204 im Bereich des ersten Handgriff 6 am Führungsstiel 2 befestigt. Die Leine 201 weist noch einen Verstellmechanismus 205 auf, durch den die Leine flexibel verkürzt oder verlängert werden kann. Dies kann bspw. durch ein Klemmelement 205 realisiert werden, durch das eine Schlaufe der Leine 201 gezogen werden kann.

Die Auffangvorrichtung 200 kann mittels eines Betätigungselements, wie bspw. einem Tasters 111, mit dem Schneidkopf 100 bzw. der Schutzhaube 110 gekoppelt und wieder gelöst werden. Das Betätigungselement 111 kann Rückstellelemente in Form von Federn o.ä. aufweisen. Das Betätigungselement 111 ist an der Auffangvorrichtung 200 befestigt.

Es kann ein Verschlusselement bzw. eine Verschlussklappe 116 vorgesehen sein, die beim Entfernen der Auffangvorrichtung 200 automatisch die Durchgangsöffnung 112 abdeckt bzw. verschließt. Die Verschlussklappe 116 kann federgelagert sein (Kraft liegt an und schließt die Klappe, wenn die Auffangvorrichtung 200 entfernt wird. Dies unterstützt auch einen Betrieb bspw. bei nassem Rasen und schützt den Nutzer.

Die Auffangvorrichtung 200 kann als mehr oder weniger elastischer bzw. flexibler Beutel ausgestaltet sein. Die Auffangvorrichtung 200 kann sich zum hinteren Ende 203 hin verjüngen und hinten zu öffnen (öffenbar) sein.

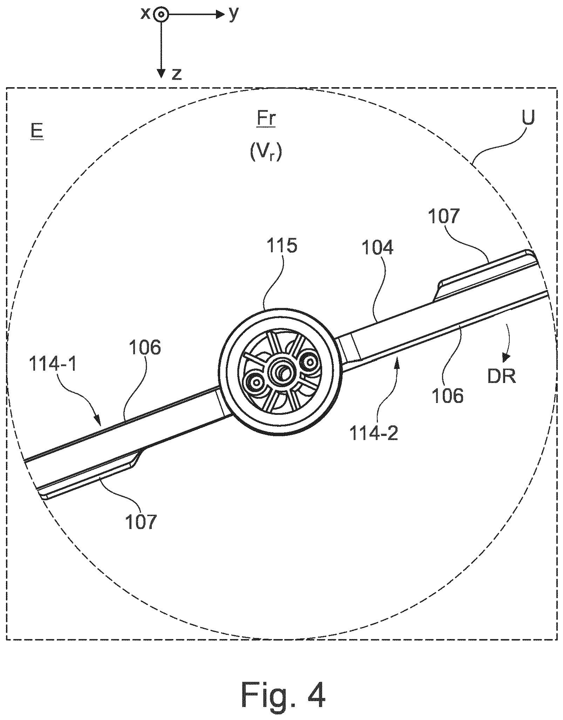

Die Figuren 4 bis 7 betreffen das Schneidwerkzeug 104 bzw. das Schneidmesser 114 und zeigen Details des Schneidwerkzeugs 104 bzw. des Schneidmessers 114.

Die Schutzhaube 110 und das Schneidwerkzeug 104 sind ausgebildet, um zur Beförderung des Schnitts durch die Durchgangsöffnung 112 zu kooperieren. Genauer ausgedrückt, sind das Schneidwerkzeug 104 und die Schutzhaube 112 dahingehend ausgebildet, dass sie bezüglich einer Strömung von Luft kooperieren, durch die vom Schneidmesser 114 erzeugter Rasenschnitt durch die Durchgangsöffnung 112 in die Auffangvorrichtung 200 befördert wird. Das Schneidwerkzeug 104 ist geometrisch, insbesondere strömungstechnisch, eingerichtet, um den Schnitt zur Auffangvorrichtung 200 zu befördern.

Das Schneidwerkzeug 104, insbesondere ein Schneidmesser 114, des Schneidwerkzeugs 104 erzeugt im Betrieb eine Luftströmung in die Schutzhaube 110 hinein. Mit anderen Worten erzeugt das Schneidmesser 104 im Betrieb einen Unterdruck bzw. Sog, der den Schnitt in die Schutzhaube 110 hineinsaugt. Die im Betrieb vom Schneidwerkzeug 104 erzeugte Luftströmung (Unterdruck, Sog) wird von der Schutzhaube 110 umgelenkt und in Richtung auf die Durchgangsöffnung 112 abgeleitet /abgelenkt. Das Schneidwerkzeug 104, insbesondere das Schneidmesser, sind strukturell und geometrisch ausgestaltet, um die Luftströmung bzw. den Sog bzw. Unterdruck zu erzeugen.

Gemäß einem Aspekt kann das Schneidwerkzeug 104 zweiteilig sein. Alternativ kann das Schneidwerkzeug 104 auch einteilig sein. Bei einer zweiteiligen Ausgestaltung gibt es bspw. zwei Teile 114-1, 114-2 des Schneidmessers 114. Diese können separat ausgetauscht werden, was die Ersatzteilkosten reduzieren kann.

Das Schneidmesser 114, bzw. die Teile/Klingen 114-1, 114-2 weist einen abgewinkelten Anteil/Teil bzw. Verbreiterung (auch Flügel, oder Strömungselement) 107 auf. Im Bereich des abgewinkelten Anteils 107 ist das Schneidmesser 114 breiter als radial weiter innen (bezogen auf Drehachse).

Das Gewicht eines Schneidmessers 114, insbesondere eines Teils bzw. einer Klinge 114-1, 114-2 eines Schneidmessers, ist nicht größer ist als 10 g, vorteilhaft nicht größer als 5 g, nicht größer als 3 g. Es kann mit Vorteil in einem Bereich von 2,2 g liegen.

Das Schneidwerkzeug kann aus Metall sein. Mit Vorteil umfasst das Schneidmesser 114 einen Kunststoff oder besteht vollständig aus diesem Kunststoff.

Bei diesem Kunststoff des Schneidmessers kann es sich bspw. um Polyphenylensulfid (mit 40% Glasfaseranteil handeln (PPS GF40). Es kann sich auch um Polyoxymethylen (POM), auch als Acetal bekannt handeln. Auch Polycarbonat (PC) kommt in Betracht. Mit besonderem Vorteil kann jedoch Polyamid (PA), auch als Nylon bekannt verwendet werden. Das Polyamid kann vorteilhaft einen Glasfaseranteil aufweisen.

Besonders vorteilhaft besteht das Schneidmesser bzw. das Schneidwerkzeug aus Polyamid mit einem Glasfaseranteil von über 10%, insbesondere mit einem Anteil an Glasfaser von 33%, d.h. es kann sich um PA66 (66% Polyamid mit 33% Glasfaser) handeln. Es sind vorteilhaft etwa zwei Drittel Polyamid und ein Drittel Glasfaser.

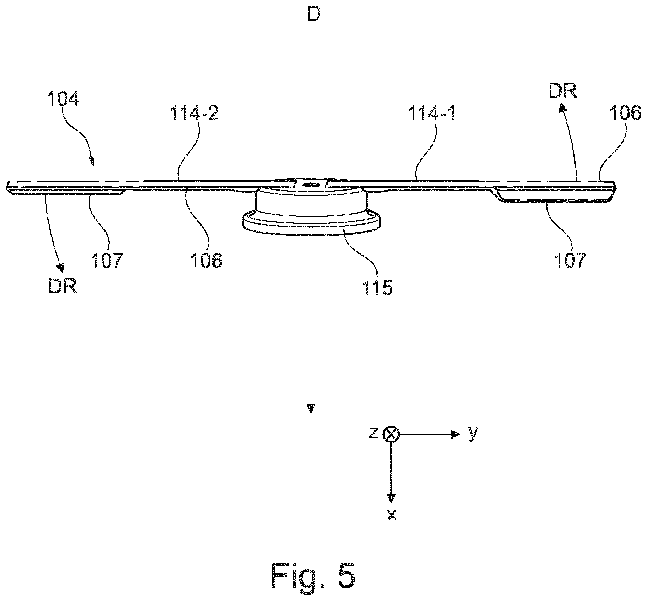

Die Figuren 4 und 5 zeigen zwei vereinfachte schematische Darstellungen des Schneidwerkzeuges 104, das hier isoliert dargestellt ist. Figur 4 zeigt das Schneidwerkzeug von oben. Figur 5 zeigt das Schneidwerkzeug 104 von der Seite.

Aus Figur 4 ist ersichtlich, dass das Schneidwerkzeug 104 ein Schneidmesser 114 aufweist, das im Betrieb um die Drehachse D in der Drehebene E bspw. in einer ersten Drehrichtung DR (normaler Schneidbetrieb) rotiert. Die Fläche, die vom Schneidwerkzeug 104 bzw. Schneidmesser 1114 während der Rotation überstrichen wird, wird im vorliegenden Kontext als Rotationsfläche Fr bezeichnet. Die Rotationsfläche Fr liegt in der Eben E.

Das Schneidwerkzeug 104 bzw. Schneidmesser 114 weist zwei Teile 114-1, 114-2 auf, ist also zweiteilig. Dabei handelt es sich um ein erstes Schneidmesser 114-1 und ein zweites Schneidmesser 114-2. Der Vorteil eines zweiteiligen Aufbaus besteht darin, dass nur ein einzelnes Schneidmesser 114-1, 114-2 ausgetauscht werden muss, wenn es zu Schaden kommt.

Zur besseren Orientierung sind in den Figuren die kartesischen Richtungen X, Y und Z eingetragen. Diese dienen jedoch nur der groben Orientierung und sind nicht völlig exakt zu verstehen. Die Drehebene E und damit auch die Rotationsfläche Fr liegen demnach etwa in der Z-Y-Ebene. Die Drehachse D erstreckt sich in etwa entlang der X-Richtung.

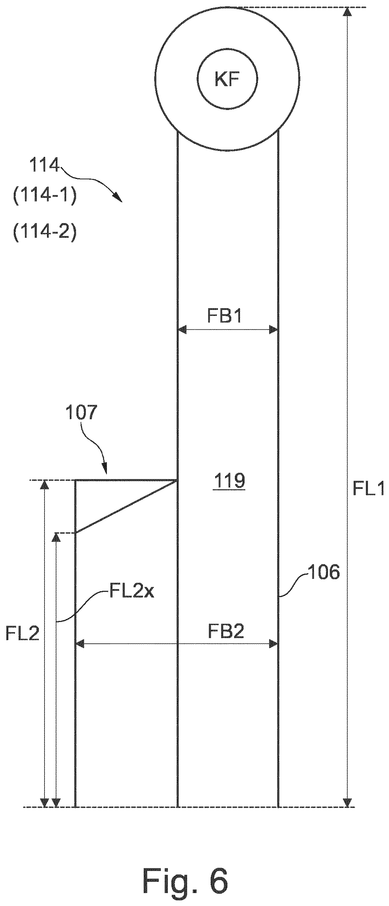

Figur 6 ist eine vereinfachte schematische Draufsicht auf einen ersten Teil oder zweiten Teil bzw. eine erste oder zweite Klinge 114-1 oder 114-2 des Schneidmessers 114 bzw. Schneidwerkzeugs 104. Diese Ansicht dient unter anderem zu Beschreibung der Größenverhältnisse. Das Schneidmesser 114, bzw. seine Klinge 114-1, 114-2 umfasst einen ersten Bereich 119, der im Wesentlichen flach ist und die Schneidkante 106 über nahezu die ganz Länge FL1 aufweist. Es umfasst einen zweiten, abgewinkelten Bereich 107, der auch als Strömungselement 107 oder als Flügel 107 bezeichnet wird. Das Schneidmesser 114, bzw. seine Klinge 114-1, 114-2 weist eine erste Breite FB1 und radial weiter außen im Bereich des Flügels 107 eine zweite Breite FB2 auf. Die zweite Breite FB2 ist größer als die erste Breite FB1. Das Verhältnis FB2/FB1 kann 1,5 betragen. Insbesondere kann die erste Breite FB1 etwa 10 mm betragen und die zweite Breite FB2 kann 15 mm betragen. Die Länge FL1 einer Klinge bzw. eines Teils 114-1, 114-2 eines Schneidmessers 114 kann zwischen 80 mm und 100 mm, vorteilhaft ca. 90 mm betragen. Die Länge FL2 des breiten Abschnitts (der den Flügel 107 umfasst) kann zwischen 30 mm und 50 mm, vorteilhaft ca. 40 mm betragen.

Das Strömungselement 107 kann sich mit zunehmendem Abstand von der Schnittkante 106 auch etwas verjüngen, was durch eine verkürzte zweite Länge FL2x angedeutet ist. Das kann strömungstechnische Verbesserungen bringen.

Das Schneidmesser 114 bzw. jeder Teil 114-1, 114-2 weist einen eigenen Koppelbereich 118 auf, mit dem es mit dem Antrieb gekoppelt werden kann (bspw. Koppelelement 115).

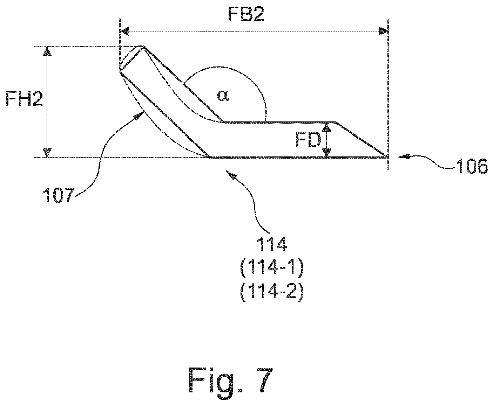

Figur 7 ist ein vereinfachter schematischer Querschnitt des Schneidmesser 114 mit abgewinkeltem Anteil bzw. Flügel 107. Hier ist nochmals die zweite Breite FB2 dargestellt. Wie man sieht, gibt es einen Winkel α zwischen der Klinge und dem Flügel 107. Dieser Winkel befindet sich auf der nach innen, in die Schutzhaube 110 hineinzeigenden Seite des Schneidmessers und beträgt deutlich weniger als 180°, vorteilhaft liegt er etwa zwischen 110° und 150°, mit Vorteil ist er etwa 135° bzw. 137°. Durch den abgewinkelten Anteil bzw. Flügel 107 ergibt sich eine Höhe FH2 von ca. 5 mm. Die Stärke FD der Klinge 119 und des Flügels kann kleiner als 1mm sein, insbesondere 0,4 mm. Der Flügel 107 bewirkt eine Luftströmung (bzw. Unterdruck, Sog unterhalb der Schutzhaube) in die Schutzhaube 110 hinein. Die Schutzhaube 110 ist innen so ausgebildet, dass diese Luftströmung dann durch die Durchgangsöffnung 112 in die Auffangvorrichtung 200 hineingelenkt wird.

Das Strömungselement 107 bzw. der Flügel ist hier vereinfacht gerade dargestellt. Er kann und wird in der Regel jedoch ein gekrümmtes Querschnittsprofil aufweisen, wie es durch die gestrichelten Linien dargestellt ist. Hierdurch kann die Luftströmung (Sog unterhalb der Schutzhaube) noch verbessert werden.

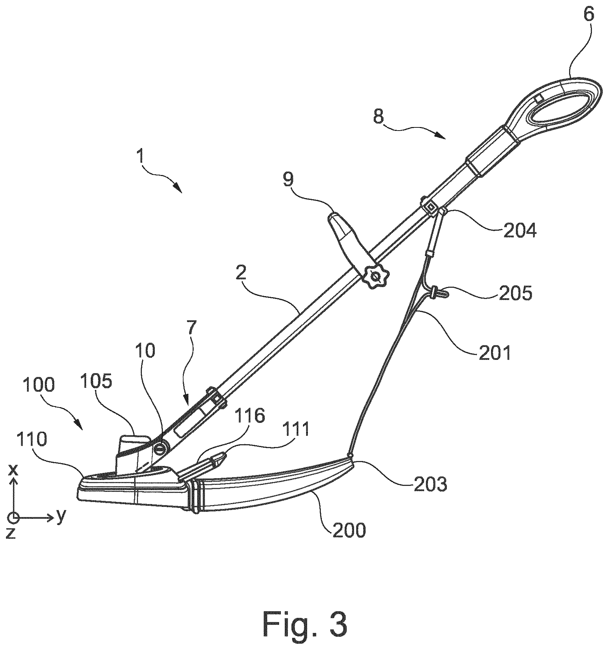

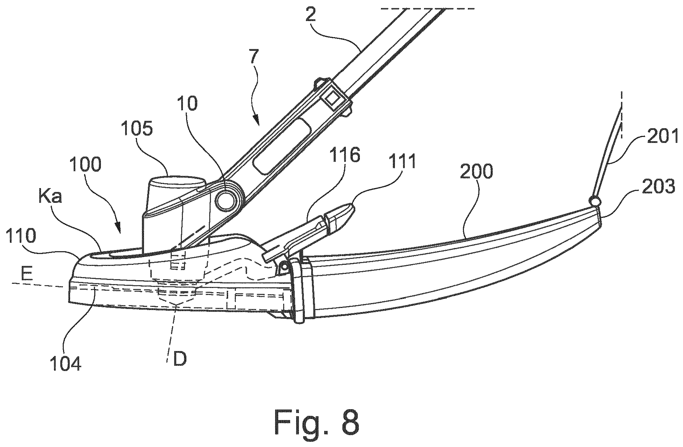

Figur 8 ist ein vereinfachter seitlicher Ausschnitt der Figur 3 (seitliche Ansicht), wobei die Schutzhaube 110 zur besseren Darstellung der Details transparent gestaltet ist. Aus Figur 8 und den Figuren 4 und 5 ist zu entnehmen, dass die Schutzhaube 110 die Rotationsfläche Fr von oben überdeckt und den äußeren Umfang U der Rotationsfläche Fr ebenfalls umlaufend überdeckt. Die Schutzhaube 110 kann dabei mindestens zu einem überwiegenden Teil, insbesondere mindestens 270°, einen äußeren Umfang U des im Betrieb um die Drehachse D rotierende Schneidwerkzeugs 104 überdecken. Die Schutzhaube 110 reicht somit um die Rotationsfläche Fr herum und umschließt den Umfang U bzw. die Rotationsfläche. Genaugenommen handelt es sich weniger um eine Rotationsfläche Fr, sondern um einen kreiszylindrischen Rotationskörper bzw. ein kreiszylindrisches Rotationsvolumen Vr, das den Bereich umfasst, in dem sich das Schneidwerkzeug 104 beim Rotieren bewegt. Vereinfachend wird hier von der Rotationsfläche Fr gesprochen. Die Schutzhaube 110 umschließt die Stirnfläche (die dann Fr wäre) und die Mantelfläche dieses Rotationsvolumens.

Das Schneidwerkzeug 104 besitzt mindestens ein Strömungselement 107, wobei in diesem Beispiel zwei Schneidmesser 114-1, 114-2 mit jeweils einem Strömungselement 107 zu sehen sind. Durch die Strömungselemente 107 wird ein Sog erzeugt, der den Schnitt in die Schutzhaube saugt.

Das Schneidwerkzeug 104 bzw. jedes Schneidmesser 105 besitzt eine Schnittkante 106, wobei jedes Strömungselement 107 an einer der Schnittkante 106 gegenüberliegenden Seite des Schneidmessers 105 angeordnet ist. Die Strömungselemente 107 sind als eine Art abgewinkelte Flügel 107 ausgebildet, die unter dem Gerät Unterdruck erzeugen, der den Rasenschnitt in Richtung Schutzhaube zieht.

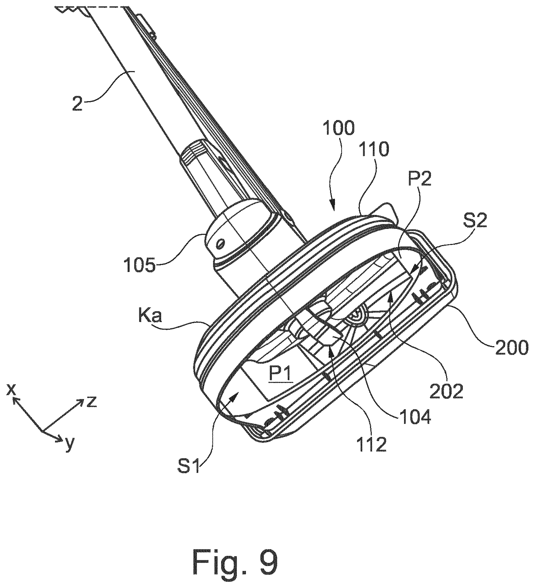

Figur 9 ist ein vereinfachter perspektivischer Ausschnitt einer Ansicht auf den Schneidkopf 100 von schräg unten. Aus dieser Perspektive ist die Durchgangsöffnung 112 zu erkennen, die den von der Schutzhaube 110 abgedeckten Arbeitsbereich (also die Rotationsfläche Fr) des Schneidwerkzeugs 104 mit dem Innenraum 202 der Auffangvorrichtung 200 verbindet.

Die Schutzhaube 110 kann grundsätzlich derart eingerichtet und angeordnet sein, dass vom Schneidwerkzeug 104 im Betrieb erzeugter Schnitt durch die Durchgangsöffnung 112 in der Schutzhaube 110 in die Auffangvorrichtung 200 befördert wird.

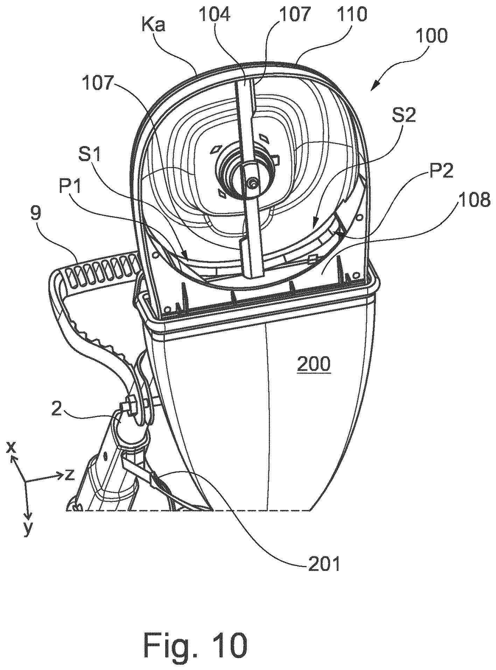

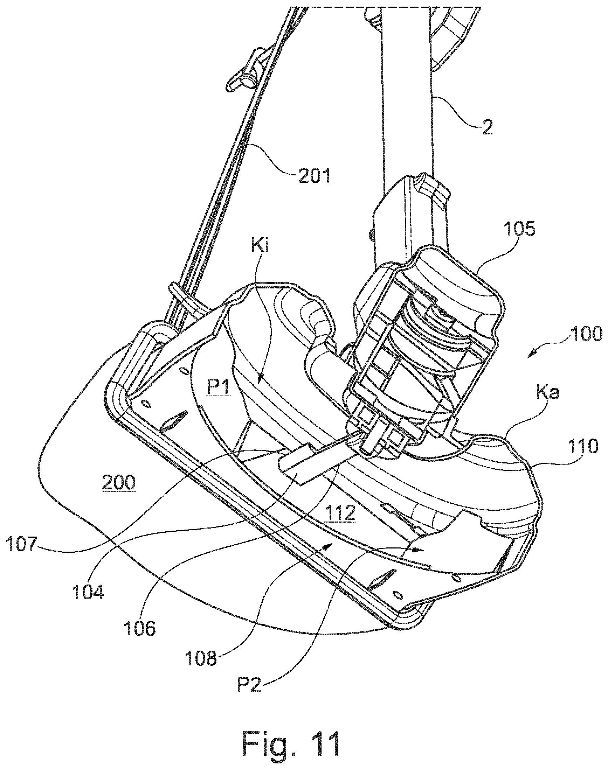

In Figur 9 ist zu erkennen, dass die Durchgangsöffnung 112 seitlich versetzt angeordnet ist, d.h. dass sie asymmetrisch bezüglich der Drehachse D angeordnet ist. Mit anderen Worten ist die Durchgangsöffnung 112 bezüglich der Drehachse D in Drehrichtung DR bzw. entlang der Z-Achse verschoben. Dies lässt sich auch den Figuren 10 und 11, die weiter unten beschrieben sind, entnehmen.

Figur 10 ist ein vereinfachter perspektivischer Ausschnitt einer Ansicht auf den Schneidkopf 100 von unten. Aus dieser Figur, wie auch aus den Figuren 1 bis 3 und 6 ergibt sich, dass die Auffangvorrichtung 200 auf spezielle Art mit dem Schneidkopf 100 gekoppelt ist. Die Schutzhaube 110 ist dazu in einem der Auffangvorrichtung 200 zugewandten Bereich ausgebildet, um eine lösbare Ankopplung der Auffangvorrichtung 200 zu ermöglichen.

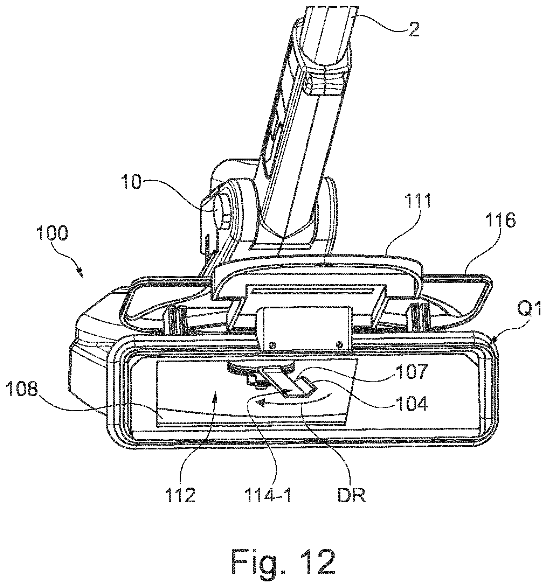

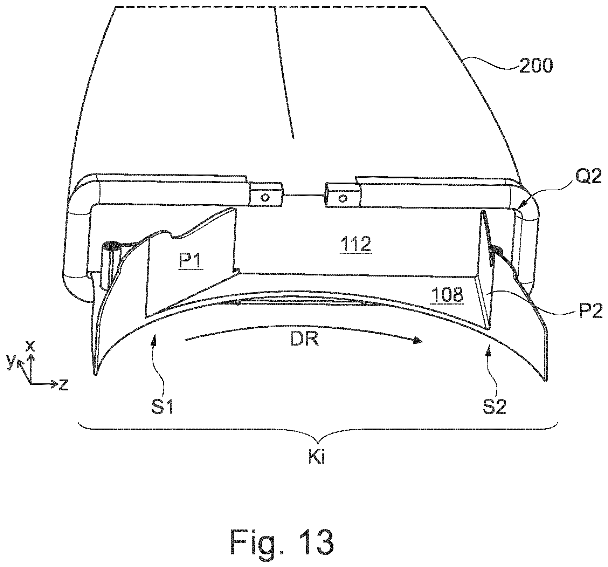

Aus den Figuren 9 bis 11 lassen sich weitere Details entnehmen. Figur 11 ist ein vereinfachter perspektivischer Querschnitt einer Ansicht auf den Schneidkopf 100 von schräg unten. Figur 12 ist eine vereinfachte perspektivische Ansicht auf den Schneidkopf aus Richtung der Auffangvorrichtung, wobei die Auffangvorrichtung nicht dargestellt ist. Figur 13 zeigt unter anderem die zu Figur 12 entgegengesetzte Richtung. Figur 13 ist eine vereinfachte perspektivische Ansicht aus Richtung des Schneidkopfes 100 auf den Übergangsbereich zwischen Schneidkopf 100 und Auffangvorrichtung 200, wobei die meisten Teile des Schneidkopfes 100 nicht dargestellt sind.

Insbesondere aus den Figuren 10 und 11 ist zu entnehmen, dass die Schutzhaube 110 einen ersten Adapterquerschnitt Q1 bildet, der zum lösbaren Ankoppeln eines korrespondierenden zweiten Adapterquerschnitts Q2 der Auffangvorrichtung 200 ausgebildet ist. Die korrespondierenden Adapterquerschnitte Q1, Q2 der Schutzhaube 110 und der Auffangvorrichtung 200 betreffen dabei die strukturelle, physische Ausgestaltung, die so aufeinander abgestimmt ist, dass bei angekoppelter Auffangvorrichtung 200 die Durchgangsöffnung 112 in die Auffangvorrichtung führt. Mit anderen Worten steht bei angekoppelter Auffangvorrichtung 200 das Innere der Auffangvorrichtung 200 über die Durchgangsöffnung 112 in kommunizierender Verbindung (bezüglich der Luftströmung und des Transportes von Schnitt) mit dem Innenraum der Schutzhaube 110.

Wie insbesondere den Figuren 8, 9 und 11 zu entnehmen ist, ist innerhalb der Schutzhaube 110 ein Strömungsprofil durch eine innere Kontur Ki ausgebildet. Diese innere Kontur Ki ist derart eingerichtet und angeordnet, dass die Bewegung des Schnitts in die Auffangvorrichtung 200 gefördert wird. Dabei ist berücksichtigt worden, dass der Schnitt nicht ohne Weiteres vom Inneren der Schutzhaube 110 durch die Durchgangsöffnung 112 in die Auffangvorrichtung 200 gelangt. Vorteilhaft muss hierzu im Inneren der Schutzhaube 110 ein geeignetes und auf die Art und den Betrieb des Schneidwerkzeuges 104 abgestimmtes Strömungsprofil ausgebildet sein.

Die innere Kontur Ki ist vorteilhaft auf das Schneidwerkzeug 104 angepasst und wirkt mit diesem synergetisch zusammen. Das Schneidwerkzeug 104 bzw. Schneidmesser 114 erzeugt im Betrieb einen Unterdruck bzw. Sog, der den Schnitt zunächst in die Schutzhaube 110 hineinsaugt. Dort wird der Schnitt aufgrund des Strömungsprofils der inneren Kontur Ki der Schutzhaube 110 in Richtung auf die Auffangvorrichtung bzw. die Durchgangsöffnung 112 und durch diese hindurch geleitet.

Mit Vorteil kann die innere Kontur Ki, die zur Ausbildung des Strömungsprofils dient, in einem der Auffangvorrichtung 200 zugewandten Bereich angeordnet sein und von einer äußeren Kontur Ka (vgl. bspw. Fig. 1, 9 10, 11) der Schutzhaube 110 beabstandet sein. Zum Beispiel kann die Schutzhaube 110 eine oder mehrere äußere Wände aufweisen, welche die Kontur Ka bilden und eine oder mehrere innere Wände, die dann die innere Kontur Ki bilden und damit das Strömungsprofil erzeugen.

In anderen Ausführungen können Ka und Ki auch übereinstimmen. Bspw. kann die innere Kontur Ki die äußere Kontur Ka festlegen.

Die innere Kontur Ki ist mit Vorteil nach Art eines Schachts ausgebildet. Dieser Schacht unterstützt durch seine spezifische Form eine Zuführung des im Betrieb erzeugten Schnitts zur Durchgangsöffnung 112 und bis in die Auffangvorrichtung 200 hinein. Die innere Kontur Ki ist dazu von einer oder - wie im vorliegenden Beispiel - mehreren inneren Wänden gebildet.

Der Schacht läuft vom Schneidwerkzeug 104 in Richtung auf die Durchgangsöffnung 112 zu und wird im Verlauf enger werden. Dabei kann er anfänglich, also näher am Schneidwerkzeug 104 breiter sein als in der Nähe der Durchgangsöffnung 112. Dabei bezieht sich hier die Breite des Schachts auf eine Dimension Z in der Drehebene E, insbesondere die Dimension Z.

Die innere Kontur Ki weist eine untere Führung 108 auf, die nach Art einer Bodenplatte, ausgestaltet ist. Diese Bodenplatte schließt den Bereich zwischen Schneiderwerkzeug und Durchgangsöffnung 112 nach unten ab. Dadurch wird verhindert, dass Schnitt nach unten verloren geht.

Die innere Kontur Ki weist ein erstes Profil P1 und ein zweites Profil P2 auf. Das erst Profil P1 ist auf einer ersten Seite S1 der Durchgangsöffnung 112 angeordnet. Das erste Profil P1 ist anders ausgestaltet als das zweite Profil P2. Das zweite Profil ist auf einer zweiten Seite S2 der Durchgangsöffnung 112 angeordnet. Die erste Seite S1 bzw. das erste Profil P1 ist bezogen auf die Drehrichtung DR des Schneidwerkzeuges 104 vor der Durchgangsöffnung 112 angeordnet und die zweite Seite S2 bzw. das zweite Profil P2 ist bezogen auf die Drehrichtung DR des Schneidwerkzeuges 104 nach der Durchgangsöffnung 112 angeordnet.

Das erste Profil P1 ist so ausgestaltet, dass es dem Umfang U (vgl. Figur 4) des im Betrieb um die Drehachse rotierenden Schneidwerkzeugs 104 länger folgt als das zweite Profil P2, wobei insbesondere das erste Profil P1 bezogen auf den Umfang U des rotierenden Schneidwerkzeuges 104 länger und flacher tangential (am Umfang U) entlang verläuft als das zweite Profil P2. Das bewirkt, dass vom Schneidwerkzeug 104 erzeugter Schnitt vom ersten Profil P1 länger geführt wird als vom zweiten Profil P2 und vom zweiten Profil in einem steileren Winkel auf die Durchgangsöffnung 112 geführt wird. Diese Asymmetrie zwischen den beiden Profilen P1, P2 unterstützt die Zuführung von Schnitt zur Durchgangsöffnung 112 deutlich.

Der Rasentrimmer 1 kann mit Vorteil ausschließlich tragbar bzw. für den tragbaren Gebrauch eingerichtet sein und keine Einrichtungen besitzen, die ihn über die zu bearbeitende Fläche tragen, wie bspw. Räder oder Rollen. Der Rasentrimmer 1 kann also rollenfrei sein.

Das Gewicht (Gesamtgewicht ohne Füllung der Auffangvorrichtung (200)) des Rasentrimmers 1 ist nicht größer als 10 kg, insbesondere nicht größer als 5 kg, insbesondere nicht größer als 2 kg, insbesondere nicht größer als oder etwa. 1,5 kg.

Der Rasentrimmer 1 ist eingerichtet, um im Akkubetrieb bei einer Drehzahl von 800 rpm (ggf. steuerbar) eine Laufzeit (Arbeitszeit) von 25 Minuten haben. Die Laufzeit (Arbeitszeit) kann ohne Last ca. 30 Minuten betragen. Der Geräuschpegel (Noise Level) beträgt im Betrieb bei einem Meter Abstand etwa 78 dB. Die Betriebsspannung beträgt ca. 11,2 V. Der Akku hat eine Kapazität von 2000 mAh und einen Ladeoutput von 12 V und 500 mA. Es handelt sich um einen Li-Ionen Akku. Mit Vorteil ist der Rasentrimmer 1 ausschließlich Akku-betrieben (kein Netzbetrieb).

### Bezugszeichenliste

- 1: Rasentrimmer
- 2: Führungsstiel
- 6: Erster Handgriff
- 7: Erstes unteres Ende des Führungsstiels
- 8: Zweites oberes Ende des Führungsstiels
- 9: Zweiter Handgriff
- 10: Gelenkanordnung zwischen Schneidkopf und Führungsstiel
- 100: Schneidkopf
- 104: Schneidwerkzeug
- 105: Antrieb
- 106: Schnittkante
- 107: Strömungselement, Flügel an Schneidmesser, abgewinkeltes Teil
- 108: Bodenplatte, untere Führung
- 110: Schutzhaube
- 111: Taster, Betätigungseinrichtung
- 112: Durchgangsöffnung
- 114: Schneidmesser
- 114-1: Erster Teil/Klinge des Schneidmessers (auch Schneidmesser)
- 114-2: Zweiter Teil/Klinge des Schneidmessers (auch Schneidmesser)
- 115: Koppelelement zum Ankoppeln an Antrieb/Welle von Antrieb
- 116: Verschlusselement, Verschlussklappe
- 118: Koppelbereich des Schneidmessers
- 119: Erster Bereich des Schnittmessers mit Schneidkante
- 200: Auffangvorrichtung
- 201: Verstellbare Halteleine
- 202: Innenraum der Auffangvorrichtung
- 203: Abgewandte Seite/abgewandtes Ende der Auffangvorrichtung
- 204: Haken zum Einhaken der Auffangvorrichtung am Führungsstil
- 205: Verstellmechanismus für (bspw. Halteleine der) Auffangvorrichtung
- α: (Summarischer) Winkel zwischen Flügel 107 und Schneidmesserklinge 114-1, 114-2 (vorteilhaft < 180°)
- D: Drehachse
- DR: Drehrichtung Schneidwerkzeug im Schneidbetrieb
- E: Drehebene des rotierenden Schneidwerkzeugs
- Fr: Rotationsfläche des Schneidwerkzeugs in der Drehebene E
- Vr: Rotationsvolumen des Schneidwerkzeugs
- U: Äußere Umfangslinie des rotierenden Schneidwerkzeuges
- Ki: Innere Kontur der Schutzhaube
- Ka: Äußere Kontur der Schutzhaube
- P1: Erstes Profil (Strömungsprofil)
- P2: Zweites Profil (Strömungsprofil)
- S1: Erste Seite
- S2: Zweite Seite (in Drehrichtung DR nach erster Seite)
- Q1: Erster Adapterquerschnitt
- Q2: Zweiter Adapterquerschnitt
- X, Y, Z: Kartesische Koordinaten
- FB1: Breite des ersten Abschnitts des Schneidmessers
- FB2: Breite des zweiten Abschnitts des Schneidmessers
- FL1: Gesamtlänge des Schneidmessers
- FL2: (ggf. innere) Länge des Strömungselements (bspw. FL2 kleiner als FL1)
- FL2x: Verkürzte äußere Länge des Strömungselements 107
- FD: Dicke/Stärke des Schneidmessers

## Patentansprüche

1. Tragbarer Rasentrimmer (1) umfassend: einen Führungsstiel (2), einen an einem ersten unteren Ende (7) des Führungsstiels (2) angeordneten Schneidkopf (100) mit einem im Betrieb um eine Drehachse (D) in einer Drehebene (E) innerhalb einer Rotationsfläche (Fr) rotierenden Schneidwerkzeug (104) und einen Antrieb (105) zum Antreiben des Schneidwerkzeugs (104) um die Drehachse (D), **dadurch gekennzeichnet, dass** der Rasentrimmer (1) eine Auffangvorrichtung (200) und der Schneidkopf (100) eine Schutzhaube (110) aufweist, wobei die Schutzhaube (110) das im Betrieb um die Drehachse (D) in der Drehebene (E) rotierende Schneidwerkzeug (104) von oben bis auf eine Durchgangsöffnung (112) umschließt und die Schutzhaube (110) und das Schneidwerkzeug (104) derart eingerichtet und angeordnet sind, dass vom Schneidwerkzeug (104) im Betrieb erzeugter Schnitt durch die Durchgangsöffnung (112) in der Schutzhaube (110) in die Auffangvorrichtung (200) befördert wird, wobei die Schutzhaube (110) und das Schneidwerkzeug (104) ausgebildet sind, um zur Beförderung des Schnitts durch die Durchgangsöffnung (112) bezüglich einer Luftströmung zu kooperieren.

2. Rasentrimmer (1) nach Anspruch 1, wobei die Schutzhaube, eine Rotationsfläche (Fr) des Schneidwerkzeugs (104) von oben überdeckt und mindestens zu einem überwiegenden Teil, insbesondere bis auf die Durchgangsöffnung (112), einen äußeren Umfang (U) des im Betrieb um die Drehachse (D) rotierenden Schneidwerkzeugs (104) umschließt.

3. Rasentrimmer (1) nach einem der vorstehenden Ansprüche, wobei das Schneidwerkzeug (104) ein Schneidmesser (114) umfasst, wobei das Schneidmesser (114) zwei separate Teile (114-1, 114-2) aufweist.

4. Rasentrimmer (1) nach Anspruch 3, wobei das Schneidmesser (114, 114-1, 114-2) geometrisch, insbesondere strömungstechnisch, eingerichtet ist, um einen Sog oder Unterdruck, in die Schutzhaube (110) zu bewirken, wobei insbesondere das Schneidmesser ein Strömungselement (107) aufweist, durch das die Luftströmung in Form eines Sogs oder Unterdrucks in die Schutzhaube (110) bewirkt wird.

5. Rasentrimmer (1) nach Anspruch 4, wobei das Strömungselement (107) von einem abgewinkelten Anteil/Teil des Schneidmessers (114, 114-1, 114-2) gebildet wird und/oder wobei das Schneidmesser (114, 114-1, 114-2) eine Schnittkante (106) aufweisen und, das mindestens ein Strömungselement (107) auf einer der Schnittkante (106) gegenüberliegenden Seite des Schneidmessers (114, 114-1, 114-2) angeordnet ist.

6. Rasentrimmer (1) nach einem der Ansprüche 3 bis 5, wobei das Gewicht eines Schneidmessers (114, 114-1, 114-2) nicht größer ist als 10 g, vorteilhaft nicht größer ist als 5 g, vorteilhaft nicht größer ist als 3 g, vorteilhaft etwa 2,2 g beträgt und/oder wobei das Schneidmesser (114, 114-1, 114-2) einen Kunststoff umfasst, insbesondere ggf. vollständig aus Kunststoff besteht und/oder wobei der Kunststoff Polyamid (PA) mit einem Anteil an Glasfaser (GF) ist, insbesondere wobei der Kunststoff zwei Drittel PA und ein Drittel GF aufweist (PA66).

7. Rasentrimmer (1) nach einem der Ansprüche 3 bis 6, wobei die im Betrieb vom Schneidmesser (114, 114-1, 114-2) erzeugte Luftströmung von der Schutzhaube (110) in Richtung auf die Durchgangsöffnung (112) abgeleitet wird und/oder wobei im Inneren der Schutzhaube (110) eine innere Kontur (Ki) ausgebildet ist, die derart eingerichtet und angeordnet ist, dass die Bewegung des Schnitts in die Auffangvorrichtung (200) gefördert wird und/oder wobei die innere Kontur (Ki) in einem der Auffangvorrichtung (200) zugewandten Bereich angeordnet ist und von einer äußeren Kontur (Ka) der Schutzhaube (110) beabstandet ist, wobei die innere Kontur (Ki) nach Art eines Schachts ausgebildet ist und eine Zuführung des im Betrieb erzeugten Schnitts zur Durchgangsöffnung (112) unterstützt.

8. Rasentrimmer (1) nach Anspruch 7, wobei die innere Kontur (Ki) eine untere Führung, insbesondere eine Platte, aufweist, die den von der Schutzhaube (110) überdeckten Bereich außerhalb der Rotationsfläche (Fr) im Bereich der Durchgangsöffnung (112) nach unten abschließt.

9. Rasentrimmer (1) nach einem der Ansprüche 7 oder 8, wobei die innere Kontur (Ki) ein erstes Profil (P1) auf einer ersten Seite (S1) der Durchgangsöffnung (112) aufweist, und ein zweites Profil (P2) auf einer zweiten Seite (S2) der Durchgangsöffnung (112), wobei die erste Seite (S1) bezogen auf die Drehrichtung des Schneidwerkzeuges (104) vor der Durchgangsöffnung (112) und die zweite Seite nach der Durchgangsöffnung (112) angeordnet ist, und wobei das erste Profil (P1) dem Umfang des im Betrieb um die Drehachse rotierenden Schneidwerkzeugs länger folgt als das zweite Profil (P2), wobei insbesondere das erste Profil bezogen auf den Umfang (U) des rotierenden Schneidwerkzeuges (104) flacher verläuft, als das zweite Profil (P2).

10. Rasentrimmer (1) nach einem der vorstehenden Ansprüche, wobei die Durchgangsöffnung (112) bezüglich der Drehachse (D) des Schneidwerkzeuges (104) asymmetrisch angeordnet ist, insbesondere in Drehrichtung (DR) aus einem Zentrum eine Anschlussfläche der Auffangvorrichtung verschoben ist.

11. Rasentrimmer (1) nach einem der vorstehenden Ansprüche, wobei der Rasentrimmer (1) rollenfrei ist.

12. Rasentrimmer (1) nach einem der vorstehenden Ansprüche, wobei die Auffangvorrichtung (200) verstellbar ist, und/oder wobei die Auffangvorrichtung (200) als Beutel ausgestaltet ist und/oder wobei die Auffangvorrichtung mit einer von der Schutzhaube (110) abgewandten Seite, an dem Führungsstiel (2) verstellbar befestigt ist, insbesondere durch eine verstellbare Leine.

13. Rasentrimmer (1) nach einem der vorstehenden Ansprüche, wobei die Schutzhaube (110) in einem der Auffangvorrichtung (200) zugewandten Bereich ausgebildet ist, um eine lösbare Ankopplung der Auffangvorrichtung (200), insbesondere einen ersten Adapterquerschnitt (Q1) bildet, der zum lösbaren Ankoppeln eines korrespondierenden zweiten Adapterquerschnitts (Q2) der Auffangvorrichtung (200) ausgebildet ist, so dass die Durchgangsöffnung (112) in die Auffangvorrichtung führt und mit dem Inneren der Auffangvorrichtung (200) in kommunizierender Verbindung steht.

14. Rasentrimmer (1) nach einem der vorstehenden Ansprüche, wobei der Rasentrimmer (1), insbesondere die Auffangvorrichtung (200) eine Betätigungseinrichtung (111) aufweist, die eingerichtet ist, um die Auffangvorrichtung (200) mit dem Schneidkopf (100) zu koppeln und wieder von diesem zu lösen.

15. Rasentrimmer (1) nach einem der vorstehenden Ansprüche, wobei dieser ein Verschlusselement (116), insbesondere eine Verschlussklappe (116) umfasst, das eingerichtet ist, um die Durchgangsöffnung (112), insbesondere automatisch zu verschließen, wenn die Auffangvorrichtung (200) von der Schutzhaube entfernt ist.
